# EUROPÄISCHE PATENTSCHRIFT

(11) **EP 1 630 098 B1**
(45) Veröffentlichungstag und Bekanntmachung des Hinweises auf die Patenterteilung: **01.04.2009**
(21) Anmeldenummer: 05018685.7
(22) Anmeldetag: 29.08.2005
(51) Int. Cl.: B64D 11/00, F16F 7/12, B64D 9/00

(54) **Halter für Inneneinrichtungen in Flugzeugen**
Attachment for aircraft interior parts
Attache pour éléments de l'aménagement intérieur d'un avion

(30) Priorität: 31.08.2004 DE 102004042080; 12.11.2004 US 627522 P
(43) Veröffentlichungstag der Anmeldung: 01.03.2006
(73) Patentinhaber: Airbus Deutschland GmbH, 21129 Hamburg (DE)
(72) Erfinder: Humfeldt, Dirk, 22765 Hamburg (DE); Harriehausen, Michael, 22529 Hamburg (DE); Schröder, Jan, 22559 Hamburg (DE); Sperber, Martin, 41238 Mönchengladbach (DE); Demary, Michael, 53340 Meckenheim (DE)
(74) Vertreter: Maiwald Patentanwalts GmbH

(56) Entgegenhaltungen:
- EP-A- 0 490 081
- EP-A- 0 767 100
- WO-A-03/031260
- US-A- 3 968 863
- US-A- 4 178 032
- US-A1- 2003 111 310

## Beschreibung

Die vorliegende Erfindung betrifft ein Haltesystem für eine Inneneinrichtung eines Flugzeugs und ein Flugzeug, umfassend einen entsprechenden Halter.

In Flugzeugen werden Halter oder Befestigungselemente zur Halterung und Befestigung von Inneneinrichtungen, wie beispielsweise Deckenverkleidungen, Gepäckfächer oder Monumente, eingesetzt. Bei starren Befestigungselementen wirkt es sich oft als nachteilig aus, insbesondere im Falle von starken Beschleunigungen, wie sie beispielsweise im Falle heftiger Turbulenzen oder beispielsweise auch bei einer Notlandung auftreten können, dass die resultierenden Beschleunigungskräfte direkt von der Primärstruktur des Flugzeugs über den Halter an die befestigte Inneneinrichtung übertragen werden. Ebenso werden alle an der Inneneinrichtung auftretenden Kräfte oder Beschleunigungen direkt über den Halter oder das Haltersystem an die Flugzeugstruktur übertragen.

Bekannte Halter und die daran befestigten Inneneinrichtungen werden auf Basis von statischen Lasten bzw. maximaler Zuladung statisch ausgelegt. Ein Versagen der Halterung, wie es beispielsweise durch Herausbrechen aus der Inneneinrichtung aufgrund übermäßiger Beschleunigungskräfte auftreten kann, führt zu einer Beschädigung der Halterung, der Inneneinrichtung oder der Primärstruktur des Flugzeuges und kann weiterhin die Passagiere gefährden, verletzen oder zu Behinderungen bei einer möglichen Evakuierung führen.

Es ist Aufgabe der vorliegenden Erfindung, ein Haltesystem für Flugzeuge anzugeben, welches eine sichere Befestigung von Inneneinrichtungen auch unter starker mechanischer Belastung gestattet. Dabei ist ein gattungsbildendes Haltesystem aus der EP-A-0 490 081 bekannt.

Das Haltesystem umfasst einen Halter für eine Inneneinrichtung in einem Flugzeug , welcher einen Energieabsorber umfasst, wobei der Halter zwischen einer Primärstruktur des Flugzeugs und der Inneneinrichtung angebracht ist.

Durch den Energieabsorber, welcher im Halter integriert ist, wird die mechanische Belastung auf die Inneneinrichtung, bei der es sich beispielsweise um ein über den Passagieren angebrachtes Gepäckfach handeln kann, vorteilhaft limitiert. Beispielsweise kann der Energieabsorber zur Absorption von aus der Bewegung des Flugzeugs resultierender Beschleunigungsenergie ausgeführt sein. Durch die Absorption von Beschleunigungsenergien wird die Kraftübertragung von der Primärstruktur des Flugzeugs auf die Inneneinrichtung bzw. von der Inneneinrichtung auf die Primärstruktur des Flugzeugs minimiert, so dass mechanische Belastungen auf die verschiedenen Strukturen verringert werden. Dies kann vorteilhaft zu einer erhöhten passiven Sicherheit in der Kabine führen. Weiterhin kann durch den Halter mit Energieabsorber die Bauform der Inneneinrichtungen material- oder gewichtssparend ausgelegt werden, da die maximal auftretenden mechanischen Belastungen geringer ausfallen.

Somit können durch den Halter Crashimpulse, wie sie bei einer Notlandung auftreten können, zumindest teilweise absorbiert werden. Der resultierende Kraftstoß wird demnach nicht vollständig auf die Inneneinrichtung übertragen sondern vielmehr gedämpft bzw. teilweise absorbiert, so dass weiterer Schaden verhindert werden kann.

Der Halter umfasst weiterhin ein Gehäuse, wobei das Gehäuse eine Gehäuseinnenfläche aufweist. Hierbei ist der Energieabsorber zumindest teilweise in dem Gehäuse angeordnet und die Absorption von Beschleunigungsenergie erfolgt durch elastische oder plastische Verformung des Energieabsorbers.

Durch die Absorption der Beschleunigungsenergie durch plastische Verformung des Energieabsorbers wird vorteilhaft ein einfaches und effektives Halterkonzept bereitgestellt, welches Kraftspitzen, wie sie beispielsweise durch starke Erschütterungen auftreten können, wirkungsvoll reduziert.

Insbesondere sind plastisch verformbare Energieabsorber einfach und billig herzustellen und weisen einen hohen Grad an Zuverlässigkeit und Effektivität auf.

Der Halter umfasst einen ersten und einen zweiten Befestigungsbereich. Hierbei ist der erste Befestigungsbereich zur Befestigung des Halters an der Primärstruktur ausgeführt und der zweite Befestigungsbereich zur Befestigung des Halters an der Inneneinrichtung.

Vorteilhafterweise ermöglichen die Befestigungsbereiche beispielsweise eine einfache Montage. Hierbei kann der Halter zunächst an einer Hüllen- oder Deckenoberfläche oder an einem Trägerelement der Primärstruktur fest angebracht werden. Im Folgenden wird dann ein Inneneinrichtungselement am zweiten Befestigungsbereich dauerhaft mit dem Halter verbunden.

Die Befestigung des Halters an der Primärstruktur oder an der Inneneinrichtung kann mittels einer Schraube, Niete oder einem selbstverriegelnden Steckbolzen erfolgen.

Vorteilhaft kann damit beispielsweise ein Halter angegeben werden, welcher einfach montierbar ist. Der erste Befestigungsbereich kann hierzu beispielsweise zusätzlich eine Profilierung, beispielsweise in Form eines Klauenelementes aufweisen, welches auf einen rechteckförmigen Abschnitt eines Trägers aufgesteckt wird. Dabei kann das Klauenelement beispielsweise so ausgestaltet sein, dass der Halter durch dieses Aufstecken schon so an dem Träger gehaltert ist, dass sein Eigengewicht gehalten wird. Zur endgültigen Befestigung des Halters ist der Halter dann mittels der Schraube, Niete oder dem selbstvernegelnden Steckbolzen oder ähnlichen Mitteln an dem Träger fixierbar.

Bei der Inneneinrichtung kann es sich um ein Gepäckfach handeln. Vorteilhafterweise kann somit sichergestellt werden, dass im Falle einer Notlandung die über den Köpfen der Passagiere hängenden Gepäckfächer nicht aus ihrer Verankerung an der Primärstruktur oder Sekundärstruktur ausreißen. Unfälle und Verletzungen werden somit wirkungsvoll verhindert.

Gemäß einem weiteren Ausführungsbeispiel der vorliegenden Erfindung, weist der Halter des Haltesystems weiterhin ein Stellelement auf, wobei eine Reibungs- oder Haftkraft zwischen dem Energieabsorber und der Gehäuseinnenfläche über das Stellelement einstellbar ist.

Gemäß eines weiteren vorteilhaften Ausführungsbeispiels der vorliegenden Erfindung, weist der Halter eine Energieabsorptionsrichtung auf, wobei erst bei Überschreitung einer Mindestkraft, welche in Richtung der Energieabsorptionsrichtung wirkt, eine Energieabsorption durch den Energieabsorber auftritt.

Vorteilhafterweise kann die Inneneinrichtung somit bei entsprechend geringer Belastung weitgehend starr gelagert werden, so dass sie für den normalen Bordbetrieb geeignet ist. Bei erhöhter Belastung, wie beispielsweise durch einen starken Kraftstoß, setzt vorteilhafterweise eine Dämpfung ein, indem beispielsweise der Energieabsorber in Energieabsorptionsrichtung aus dem Gehäuse gezogen wird. Somit werden entsprechend starke Kraftstöße wirkungsvoll abgefangen.

Das erfindungsgemässe Haltesystem für eine Inneneinrichtung in einem Flugzeug umfasst zudenn eine Linearführung und ein Lager . Hierbei weist der erste Halter eine erste Energieabsorptionsrichtung auf und die Linearführung weist eine Führungsrichtung auf. Die Führungsrichtung besitzt hierbei eine zur Energieabsorptionsrichtung des ersten Halters parallele Komponente und die Inneneinrichtung ist an der Linearführung mittels dem Lager gleitend gelagert. Für dieses System ist eine bewegliche Führung notwendig (hier als Beispiel als Linearführung ausgeführt. Für den Fall, dass der Energieabsorber in Vorwärts-Richtung arbeitet, können die Z-Absorber/Halterung der Bewegung /Positionsänderung folgen. Für den Fall der Z-Absorber wird sich der X-Absorber (nicht absorbierend, also nicht längend) auf einer Kreisbahn bewegen und damit auch die Z-Absorber in ihrer strukturseitigen Halterposition verändern).

Somit wird ein Haltesystem bereitgestellt, welches einen Kraftstoß entlang einer Führungsrichtung abfangen oder dämpfen kann. Vorteilhafterweise ist die Führungsrichtung entlang der Richtung ausgerichtet, in welcher bevorzugt starke Kraftstöße auftreten. Bei Auftreten eines solchen starken Kraftstoßes erfolgt erfindungsgemäß eine Absorption der darin enthaltenen Energie in Richtung der Führungsrichtung, wobei sich die Inneneinrichtung während der Energieabsorption entlang der Linearführung bewegen kann.

Bei einem weiteren Ausführungsbeispiel der vorliegenden Erfindung gemäß Anspruch 2 umfasst das Haltesystem weiterhin einen zweiten Halter , wobei der zweite Halter eine zweite Energieabsorptionsrichtung aufweist und die Führungsrichtung eine zur zweiten Energieabsorptionsrichtung senkrechte Komponente aufweist. Weiterhin ist der erste Befestigungsbereich des zweiten Halters an dem Lager befestigt.

Vorteilhafterweise können somit Crashimpulse gedämpft oder abgefangen werden, welche nicht nur eine Komponente entlang der Führungsrichtung aufweisen, sondern vielmehr auch eine Komponente senkrecht zur Führungsrichtung. Die Komponente entlang der Führungsrichtung wird hierbei durch den Energieabsorber des ersten Halters absorbiert und die Komponente senkrecht zur Führungsrichtung wird durch den Energieabsorber des zweiten Halters absorbiert. Impulsspezifische Auslegung der Energieabsorber für die einzelnen Richtungen sind dadurch möglich.

Weitere Aufgaben, Ausführungsformen und Vorteile der Erfindung ergeben sich aus den Unteransprüchen.

Im Folgenden wird die Erfindung anhand von Ausführungsbeispielen unter Bezugnahme auf die Zeichnungen näher beschrieben.

Fig. 1 zeigt eine schematische Darstellung eines Halters für das Haltesystem der vorliegenden Erfindung im Ausgangszustand und nach teilweisem Auszug.

Fig. 2 zeigt eine schematische Darstellung eines Halters gemäß eines anderen Ausführungsbeispiels im Ausgangszustand und nach teilweisem Auszug.

Fig. 3 zeigt eine schematische Darstellung eines Beispiels für einen zeitlichen Verlauf einer eines Verzögerungsimpulses eines Flugzeuges an der Primärstruktur oder Sekundärstruktur (12) und an der Inneneinrichtung (13) Beschleunigung bei einer Flugzeugbruchlandung.

Fig. 4 zeigt eine perspektivische Darstellung eines im Haltesystem einsetzbaren Halters in verschiedenen Phasen der Energieabsorption.

Fig. 5 zeigt eine perspektivische Darstellung eines Haltesystems mit mehreren Haltern gemäß eines Ausführungsbeispiels der vorliegenden Erfindung.

Fig. 6 zeigt eine perspektivische Teildarstellung des Haltesystems von Fig. 5 im Ausgangszustand und nach teilweisem Auszug der Halter.

In der folgenden Figurenbeschreibung werden für gleiche oder ähnliche Elemente die gleichen Bezugsziffern verwendet.

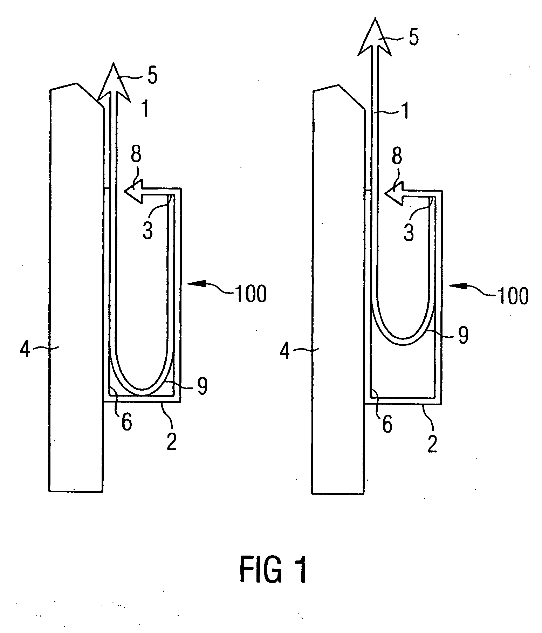

Fig. 1 zeigt eine schematische Darstellung eines Halters im Ausgangszustand und nach teilweisem Auszug . Wie Fig. 1 zu entnehmen ist, weist der Halter 100 einen Energieabsorber 1 und ein Gehäuse 2 auf. Der Energieabsorber 1 ist zumindest teilweise innerhalb des Gehäuses 2 angeordnet und an seinem einen Ende 3 an der Inneneinseite des Gehäuses befestigt. Das Gehäuse 2 ist fest mit einer Inneneinrichtung 4, bei der es sich beispielsweise um ein Gepäckfach, welches über den Köpfen der Fluggäste angebracht ist, handelt, verbunden (oder umgekehrt). Diese Verbindung erfolgt beispielsweise mittels einer Schraube, einer Niete oder einem selbstverriegelnden Steckbolzen. Es sind aber auch andere Verbindungsarten, wie beispielsweise eine Verklebung oder eine fertigungsseitige Integration in die Inneneinrichtung, denkbar.

Die Befestigung des Halters 100 an der Inneneinrichtung 4 erfolgt beispielsweise im Bereich eines Befestigungsbereichs 6, welcher einen Teil des Gehäuses 2 bildet. Zur Vereinfachung der Installation kann der Halter 100 beispielsweise während des Herstellungsprozesses der Inneneinrichtung 4 an der Inneneinrichtung befestigt werden. Nachfolgend wird dann bei der Installation der Inneneinrichtung 4 in das Flugzeug der Befestigungsbereich 5 des Energieabsorbers 1 mit einer tragenden Struktur des Flugzeugs (Primärstruktur oder Sekundärstruktur) fest verbunden. Auch diese Verbindung kann beispielsweise mittels einer Schraube, Niete oder einem selbstverriegelnden Steckbolzen erfolgen. Natürlich sind aber auch hier andere, weitere Verbindungsarten denkbar, wie beispielsweise Verklebungen oder Verquetschungen.

Aus Unfällen von Verkehrsflugzeugen ist bekannt, dass selbst bei modernen Passagierflugzeugen die Overhead-Stowage-Compartments oder Gepäckfächer, welche mit bekannten Haltern oder Halterungsvorrichtungen an der Primärstruktur gehaltert sind, unter Belastung aufgehen können oder sogar vollständig von der Primärstruktur abreißen. Dies birgt ein hohes Verletzungsrisiko für die Passagiere in sich.

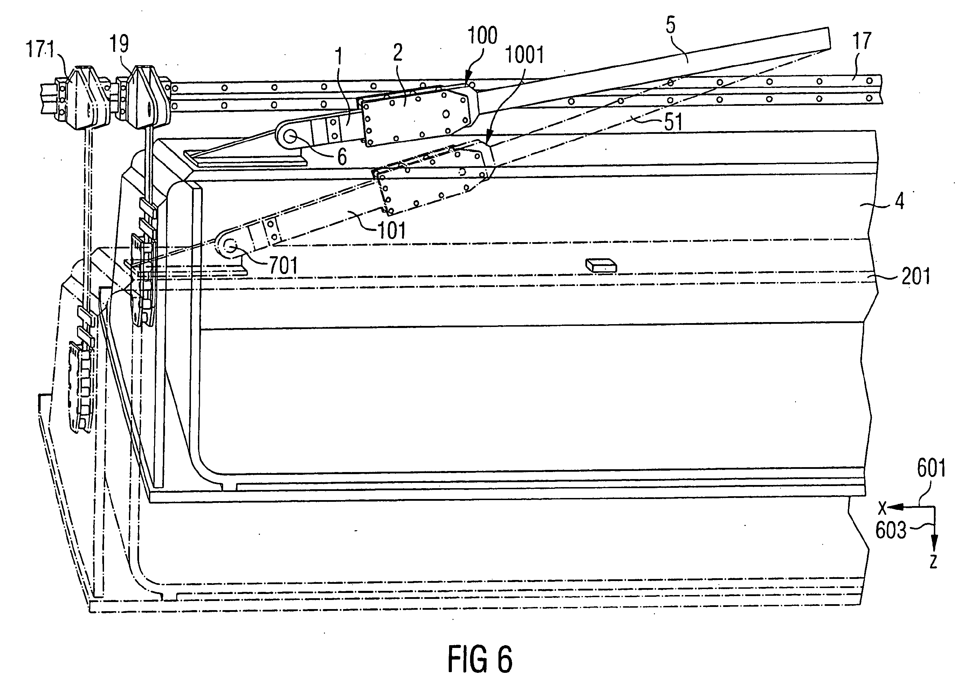

Damit die bei einem Unfall oder bei verhältnismäßig starken Erschütterungen (Beschleunigungen), wie sie beispielsweise bei Turbulenzen/Chrashlandungen auftreten können, resultierenden Beschleunigungskräfte nicht eins zu eins von der Primärstruktur oder der Sekundärstruktur auf die Inneneinrichtung (oder umgekehrt) übertragen werden, weist der erfindungsgemäße Halter 100 einen entsprechenden Energieabsorber 1 auf, welcher zwischen der Primärstruktur oder der Sekundärstruktur des Flugzeugs und der Inneneinrichtung 4 angebracht ist. Der Energieabsorber 1 wird hierbei zur Absorption von aus der Bewegung des Flugzeugs resultierender Beschleunigungsenergie verwendet. Der Energieabsorber 1 ist hierbei innerhalb des Gehäuses 2 zumindest teilweise integriert. Um die Beschleunigungsenergie zu absorbieren, wird ein Verfahrweg bereitgestellt. Hierfür kann, wie insbesondere auch aus Fig. 6 und 7 ersichtlich, ein Verfahrweg in die entsprechenden Richtungen sichergestellt werden.

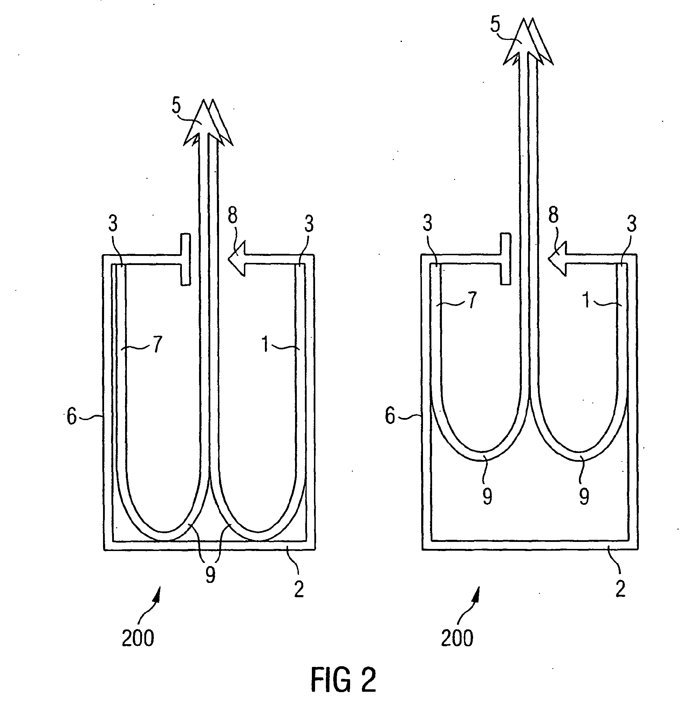

Die Funktionsweise des Energieabsorbers 1 basiert beispielsweise auf die Umformung eines Metallstreifens, wie einem Stahlblech oder Stahlstreifen, welcher in einem Käfig 2 geführt wird. Die Absorption der Beschleunigungsenergie bzw. des Beschleunigungsimpulses wird dabei durch plastische Verformung oder durch Reibung an der Käfigwand im Inneren des Gehäuses 2 durchgeführt (beim sogenannten Doppeldecker, wie in Fig. 2 dargestellt, tritt keine Reibung auf, weil es an keiner Stelle eine Relativbewegung zwischen Energieabsorber 1 und Käfig 2 gibt. Beim Eindecker (siehe Fig. 1) reibt der Energieabsorber an der einen Außenwand des Käfigs). Der Befestigungsbereich 5 ist hierbei fest mit der Primärstruktur des Flugzeugs verbunden, so dass ein Kraftstoß, welcher von der Primärstruktur ausgeht, in den Energieabsorber 1 eingeleitet wird. Dieser Kraftstoß kann dann, sofern er eine bestimmte Stärke übersteigt und insofern er eine entsprechende Richtung aufweist, zu einem Herausziehen des Energieabsorbers 1 aus dem Gehäuse 2 führen.

Beispielsweise kann zur Erhöhung der Reibungskraft der Energieabsorber 1 über das Stellelement 8 an die Innenseite des Gehäuses 2 gepresst werden, so dass eine entsprechende Haft- oder Reibungskraft zwischen dem Energieabsorber 1 und der Innenseite des Gehäuses 2 einstellbar ist.

Natürlich kann das Stellelement 8 aber auch weggelassen werden, wenn z.B. die Kraft, welche zur Verformung des Energieabsorbers 1 aufzuwenden ist, zur Energieabsorption oder Dämpfung ausreicht.

Natürlich kann der Befestigungsbereich 5 auch mit der Inneneinrichtung 4 verbunden werden. In diesem Fall wird der andere Befestigungsbereich 6 dann mit der Primärstruktur verbunden.

Durch Herausziehen des Energieabsorbers 1 aus dem Gehäuse 2 wird der Energieabsorber 1 entsprechend verformt. Hierfür muss eine entsprechende Kraft aufgewendet werden.

Der linke Teil der Fig. 1 zeigt den Ausgangszustand eines Halters 100. Der rechte Teil der Fig. 1 zeigt den Zustand eines Halters 100 nach teilweisem Auszug des Energieabsorbers 1 aus dem Gehäuse 2.

Durch das Herausziehen des Absorbers 1 aus dem Gehäuse 2 entsteht eine Energieabsorption. Kommt es zu einem sog. Rebounding, also zu einem wiederholten Kraftstoß (diesmal in entgegengesetzte Richtung), wird der Blechstreifen 1 wieder in das Gehäuse 2 zurückgeschoben (wiederum unter Energieabsorption). Somit ist der erfindungsgemäße Halter 100 auch in der Lage, Mehrfachimpulse zu bewältigen.

Natürlich ist der Halter auch in Frachträumen, z. B. als Befestigung für Container verwendbar.

Fig. 2 zeigt eine schematische Darstellung eines Halters 200 gemäß eines anderen Ausführungsbeispiels. Der linke Bereich der Fig. 2 zeigt wiederum den Ausgangszustand des Halters 200 und der rechte Bereich der Fig. 2 zeigt den Zustand des Halters 200 nach teilweisem Auszug. Der Halter 200 weist hierbei zwei verschiedene Energieabsorber 1, 7 auf, welche sich teilweise aneinander schmiegen. Hierbei handelt es sich um eine Art Doppeldeckerstruktur, welche für größere Kräfte einsetzbar ist. Die Wirkungsweise basiert zumindest teilweise auf dem selben Prinzip wie bei dem Halter der Fig. 1. Auch hier kann beispielsweise eine Haft- oder Reibungskraft über Stellelement 8 eingestellt werden, über welches dann der Energieabsorber 7 gegen das Gehäuse 2 gepresst wird.
Natürlich kann aber auch auf eine Ausnutzung einer Haft- oder Reibungskraft verzichtet werden, wenn beispielsweise die rückhaltende Kraft, welche durch die beiden Energieabsorber 1, 7 aufgrund ihrer plastischen oder elastischen Eigenschaften aufgebracht wird, ausreichend groß ist. In diesem Fall handelt es sich um eine reibungsfreie Absorption oder Dämpfung durch reine Rollbiegung. Die Energieabsorption erfolgt dann durch Geometrieänderung (Radius, Breite, Dicke) des Absorbers bzw. Änderung der Materialkennwerte oder Steuerung eines Kraft-Weg-Verhaltens.

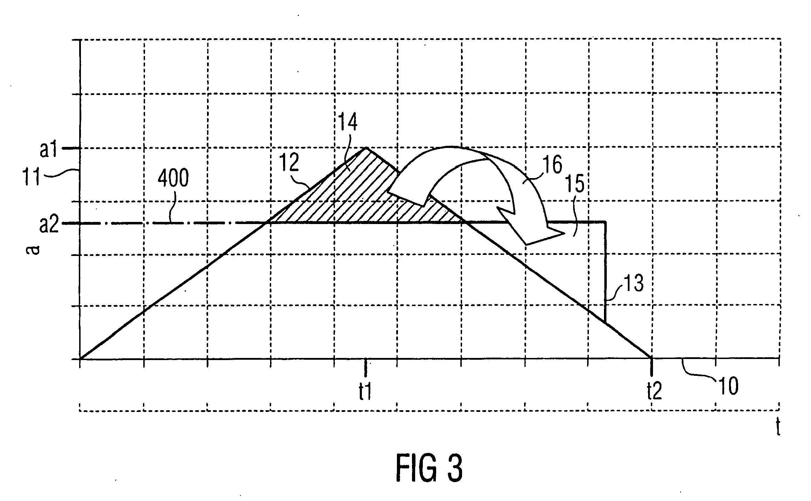

Fig. 3 zeigt eine schematische Darstellung eines Beispiels für einen möglichen zeitlichen Verlauf einer Beschleunigung in einem Flugzeug. Hierbei handelt es sich um die vereinfachte Darstellung eines dynamischen Impulses, wie er beispielsweise bei einer Notlandung auftreten kann. Natürlich sind auch viele andere zeitliche Beschleunigungsverläufe möglich.

Auf der horizontalen Achse 10 ist die Zeit aufgetragen und auf der vertikalen Achse 11 die zum jeweiligen Zeitpunkt auftretende Beschleunigung.

Der zeitliche Verlauf der Beschleunigung ist vom Zeitpunkt 0 bis zum Zeitpunkt t₁ linear und steigt während dieses Zeitraums von 0 auf den Wert a₁ an. Nach dieser unter Umständen äußerst hohen Beschleunigung erfolgt ein Abfallen der Beschleunigung innerhalb der nächsten Zeitspanne zwischen t₁ und t₂ auf den Wert 0.

Die Kurve 12 stellt hierbei den Verlauf der Beschleunigung der Primärstruktur des Flugzeuges bzw. der an der Primärstruktur befestigten Linearführung (dargestellt in Fig. 6) dar. Da zwischen der Primärstruktur und der Inneneinrichtung ein erfindungsgemäßer Halter zwischengeschaltet ist, wird der Kraftstoß nicht eins zu eins auf die Inneneinrichtung übertragen. Vielmehr findet eine Dämpfung statt, indem Beschleunigungsenergie im Halter absorbiert wird. Dies ist durch Kurve 13 symbolisiert.

Kurve 13 stellt den Verlauf der Beschleunigung an der Inneneinrichtung dar. Nachdem die Beschleunigung einen entsprechenden Schwellwert von a₂ überschritten hat (dargestellt durch gestrichelte Linie 400), setzt die dämpfende Funktion des Energieabsorbers ein. Hierbei wird der Energieabsorber aus dem Gehäuse herausgezogen. Die dabei aufzuwendende Kraft resultiert in einer Absorption der Beschleunigungsenergie, welche dazu führt, dass die Beschleunigungsspitze 14 der Kurve 12 nicht direkt auf die Inneneinrichtung übertragen wird. Vielmehr findet eine Verbreiterung der Beschleunigungskurve durch Verschiebung der Spitze 14 auf Flanke 15 statt. Hierbei bleibt die Fläche unter den Kurven 12 und 13 erhalten, was durch Pfeil 16 symbolisiert wird. Bei der Fläche unter den Kurven 12, 13 handelt es sich um den (massennormierten) Impuls bzw. die Geschwindigkeit von Primärstruktur (also dem Flugzeug an sich) und der Inneneinrichtung. Natürlich sind nach Beendigung des Kraftstoßes und erfolgter Energieabsorption beide Geschwindigkeiten konstant, was sich durch dieselbe Fläche unter den Kurven 12, 13 ausdrückt.

Die Beschleunigung kann auch zuerst in positive Richtung (bezüglich der Achse 11) und daraufhin in negative Richtung wirken. Die Zeitdauer der Beschleunigung kann unterhalb 0,1 Sekunden liegen und Spitzen von plus minus 40 g erreichen. Es gilt zu beachten, dass es sich hier lediglich um beispielhafte Werte handelt. Natürlich können die Beschleunigungen und Stoßzeiten auch ganz andere Werte einnehmen. So kann die Beschleunigung tatsächlich auch deutlich geringer ausfallen oder die Zeit, während der die Beschleunigung wirkt, kann länger sein als 0,1 Sekunden.

Die Beschleunigungsspitzen der Primärstruktur können durch den Halter zumindest teilweise kompensiert oder absorbiert werden. Somit wird ein Ausreißen oder Abreißen der Inneneinrichtung von der Primärstruktur wirksam verhindert.

Die Halterung absorbiert hierbei Energie in beide (positive und negative) Richtungen. der Energieabsorber wird hierbei aus dem Käfig 2 herausgezogen und dann in den Käfig 2 zurückgedrückt (Reboundeffect) um dann ggf. aus dieser Position erneut ausgezogen zu werden.

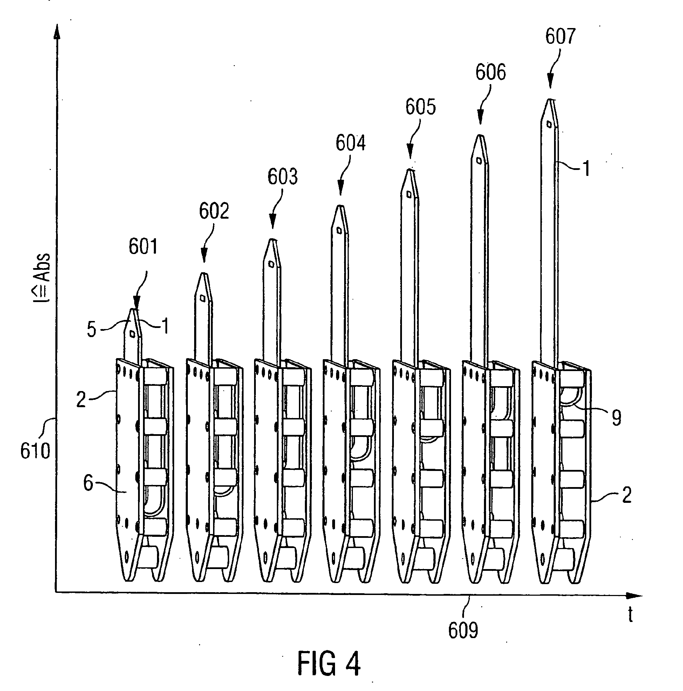

Fig. 4 zeigt einen Halter in sieben verschiedenen Phasen. Die horizontale Achse 609 symbolisiert den zeitlichen Verlauf und die vertikale Achse 610 stellt die Auszugslänge des Energieabsorbers 1 aus dem Gehäuse 2 dar. Die Auszugslänge ist ein Maß für die im Halter absorbierte Energie. Bezugsziffer 601 verweist auf den Halter in seinem Ausgangszustand. Gut zu erkennen ist der Befestigungsbereich 6, an dem das Gehäuse 2 des Halters an der Inneneinrichtung (nicht gezeigt in Fig. 4) befestigt wird. Weiterhin ist Befestigungsbereich 5 zu erkennen, welcher sich am Energieabsorber 1 befindet. An diesem Bereich 5 wird der Energieabsorber 1 mit der Primärstruktur (nicht gezeigt in Fig. 4) verbunden.

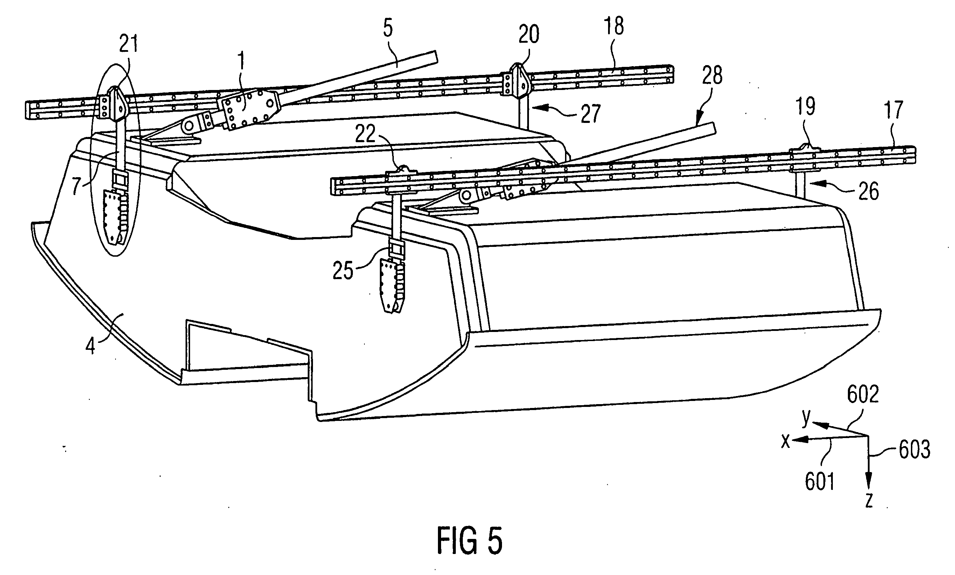

Bezugszeichen 602 bis 606 verweisen auf verschiedene Phasen der Energieabsorption durch den Halter. In allen Phasen besteht eine feste Verbindung zwischen Interior und Primärstruktur. In einer Extremsituation ist der Halter 607 dargestellt. Hier ist der Energieabsorber 1 vollständig aus dem Gehäuse 2 herausgezogen. Die Auszugslänge und die dabei absorbierte Energie ist maximal (und es besteht immer noch eine feste Verbindung zwischen Interior und der Primärstruktur). Weiterhin ist in Fig. 5 zu erkennen, wie sich der Bereich der Verformung 9 des Energieabsorbers immer weiter nach oben verschiebt. Hierbei muss eine entsprechende Verformungsenergie aufgewendet werden, welche zur erfindungsgemäßen Energieabsorption führt.

Fig. 5 zeigt eine perspektivische Darstellung eines Haltesystems mit mehreren Haltern gemäß eines Ausführungsbeispiels der vorliegenden Erfindung. Das Haltesystem, welches in Fig. 5 abgebildet ist, besteht im Wesentlichen aus zwei Führungsschienen oder Linearführungen 17, 18 und sechs Haltern oder Energieabsorbern 1, 7, 25, 26, 27, 28. Energieabsorber oder Halter 1, 28 weisen hierbei eine Energieabsorptionsrichtung mit einer Komponente parallel zur Führungsrichtung der Linearführungen 17, 18 auf. Bei einem entsprechenden Kraftstoß, welcher entlang der X-Achse 601 auftritt, kann die daraus resultierende Energie über Halter oder Energieabsorber 1, 28 absorbiert werden. Dabei erfolgt eine Bewegung der Inneneinrichtung 4 relativ zu den Führungsschienen 17, 18 in Richtung der X-Achse 601. Die Führungsschienen 17, 18 sind mit der Primärstruktur des Flugzeuges fest verbunden.

Weiterhin ist die Inneneinrichtung 4 über die Halter oder Energieabsorber 7, 25, 26, 27 und die entsprechenden Lager 19, 20, 21, 22 mit den Führungsschienen 18, 17 gleitend verbunden, so dass die Inneneinrichtung entlang der Führungsschienen 17, 18 bewegbar ist. Ein Kraftstoß in Z-Richtung 603 kann hierbei über die Halter 7, 25, 26, 27 ausgeglichen oder absorbiert werden.

Die Inneneinrichtung 4, bei der es sich beispielsweise um ein zentrales Gepäckfach handelt, welches über den Köpfen der Passagiere in der Mitte des Fluggastbereichs angebracht ist, ist über die Linearführungen 17, 18 mit der Primärstruktur verbunden. Somit kann sich die Position des Gepäckfachs 4 bei einem vorwärtigen oder rückwärtigen Impuls in X-Richtung 601 verschieben.

Beispielsweise kann die Linearführung aber auch im Hatrack integriert sein und der Halter/Energieabsorber an der Primärstruktur fixiert sein.

Fig. 6 zeigt eine perspektivische Teildarstellung des Haltesystems von Fig. 5 im Ausgangszustand und nach teilweisem Auszug der Halter. Der Halter 100 ist hierbei über den ersten Befestigungsbereich 5 mit der Primärstruktur des Flugzeuges (nicht gezeigt in Fig. 6) fest verbunden. Weiterhin ist der Halter 100 über den zweiten Befestigungsbereich 6 des Energieabsorbers 1 mit der Inneneinrichtung 4 verbunden.

Bei Auftreten eines Kraftstoßes, welcher eine Komponente in X-Richtung 601 aufweist, wird der Energieabsorber 1 zumindest teilweise aus dem Gehäuse 2 des Halters 100 herausgezogen. Dies ist durch den überlagert abgebildeten Halter 1001, Befestigungsbereich 51, Energieabsorber 101 und Befestigungsbereich 701 dargestellt. Weiterhin ist, wie in Fig. 6 zu erkennen, Lager 19 entlang der Linearführung 17 verschoben, wie durch Bezugszeichen 171 dargestellt. Ebenso ist das gesamte Gepäckfach 201 gegenüber seiner ursprünglichen Position 4 verschoben.

Vorteilhafterweise ist der Energieabsorber 1 flaschenzugartig ausgeführt, so dass die Gehäuselänge des Gehäuses 2 nur etwa halb so groß ist wie die Auszuglänge.

Das Haltesystem, wie in Fig. 6 dargestellt, funktioniert in mehrere Richtungen. Beispielsweise kann sowohl beim Auszug aus dem Gehäuse als auch beim Einzug Energie absorbiert werden, dies ist insbesondere bei einem sog. Rebound, bei dem es sich um ein Zurückfedern des Gepäckfaches handelt, notwendig. Auch ist das Haltesystem für mehrfache Crashimpulse inklusive Rebound ausgelegt. D. h. beim eigentlichen Crashimpuls wird der Blechstreifen herausgezogen, beim Rebound erfolgt der Einzug des Blechstreifen. Danach lässt sich der Blechstreifen wiederholt herausziehen und die Energieabsorption beginnt vom Neuen.

Unter Betriebsbedingungen (also beispielweise den normalen Flugbedingungen, bei denen auch Turbulenzen auftreten können) funktioniert das Haltesystem konventionell, nämlich starr. Erst das Überschreiten eines definierten Lastniveaus, was beispielsweise bei einem Crash oder einer Notlandung auftreten kann, führt zum Auszug des Energieabsorbers 1 aus dem Gehäuse 2 und damit zu einer Energieabsorption.

Somit ist ein wirkungsvolles Haltekonzept bereitgestellt, welches die auf eine Inneneinrichtung wirkende Kraft unabhängig von der Größe des Crashimpulses begrenzt, was insbesondere zu einer Sicherheitserhöhung ohne Gewichtserhöhung für das Gesamtsystem Halterung und Gepäckfach führt. Weiterhin ist das erfindungsgemäße Haltesystem für Gepäckfächer anderer Verkehrsmittel, wie beispielsweise Fähren, Busse und Schienenfahrzeuge, möglich. Vorteilhafterweise ist durch die Integration der Energieabsorber in die Halterung das heute übliche Gestaltungsbild der Kabine auch beim Einsatz von Energieabsorbern beizubehalten. Änderungen in der Gestaltung der Inneneinrichtungen sind nicht erforderlich.

Die Erfindung beschränkt sich in ihrer Ausführung nicht auf die in der Figur 5 dargestellte bevorzugte Ausführungsform. Vielmehr ist eine Vielzahl im Rahmen des Wortlauts der Ansprüche denkbar, welche von der dargestellten Lösung und dem erfindungsgemäßen Prinzip auch bei grundsätzlich anders gearteten Ausführungsformen Gebrauch macht.

Ergänzend sei darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Haltesystem für eine Inneneinrichtung in einem Flugzeug, umfassend:
eine Inneneinrichtung (4);
einen ersten Halter; mit einem Energieabsorber (1) und einem Gehäuse (2);
eine Linearführung (17);
ein Lager (19);wobei der erste Halter eine erste Energieabsorptionsrichtung aufweist;
wobei die Linearführung (17) eine Führungsrichtung aufweist;
wobei die Führungsrichtung eine zur Energieabsorptionsrichtung des ersten Halters parallele Komponente aufweist; und
wobei die Inneneinrichtung (4) an der Linearführung mittels dem Lager gleitend gelagert ist,
wobei bei einem Kraftstöß entlang der Führungsrichtung die daraus resultierende Energie über den Energieabsorber (1) absorbiert wird, wobei dabei eine Bewegung der Inneneinrichtung (4) relativ zu den Führungsschienen (17) in der Führungsrichtung erfolgt; wobei die Inneneinrichtung (4) über die Linearführungen (17) mit einer Primärstruktur des Flugzeugs verbindbar ist;
wobei der erste Halter zwischen einer Primärstruktur des Flugzeugs und der Inneneinrichtung (4) anbringbar ist;
wobei der Energieabsorber (1) zumindest teilweise in dem Gehäuse (2) angeordnet ist und außerhalb des Gehäuses (2) einen ersten Befestigungsbereich (5) aufweist, welcher zur Anbringung des Halters (100) an der Primärstruktur des Flugzeugs ausgebildet ist; und
wobei der Energieabsorber (1) durch Herausziehen aus dem Gehäuse (2) und durch Hineinschieben in das Gehäuse (2) innerhalb des Gehäuses (2) verformbar ist, so dass mehrfache Crashimpulse inklusive einem Rebound absorbierbar sind.

2. Haltesystem nach Anspruch 1, weiterhin umfassend:
einen zweiten Halter mit einem zweiten Energieabsorber und einem zweiten Gehäuse;
wobei der zweite Halter eine zweite Energieabsotptionsrichtung aufweist;
wobei die Führungsrichtung eine zur zweiten Energieabsorptionsrichtung senkrechte Komponente aufweist; und
wobei der erste Befestigungsbereich (5) des zweiten Halters an dem Lager (19) befestigt ist;
wobei der zweite Halter zwischen einer Primärstruktur des Flugzeugs und der Inneneinrichtung (4) anbringbar ist;
wobei der zweite Energieabsorber zumindest teilweise in dem zweiten Gehäuse angeordnet ist und außerhalb des zweiten Gehäuses einen ersten Befestigungsbereich aufweist, welcher zur Anbringung des zweiten Halters (100) an der Primärstruktur des Flugzeugs ausgebildet ist; und
wobei der zweite Energieabsorber durch Herausziehen aus dem zweiten Gehäuse und durch Hineinschieben in das zweite Gehäuse innerhalb des zweiten Gehäuses verformbar ist, so dass mehrfache Crashimpulse inklusive einem Rebound absorbierbar sind.

3. Haltesystem nach Anspruch 1 oder 2,
wobei das Gehäuse (2) eine Gehäuseinnenfläche aufweist; und
wobei die Absorption von Beschleunigungsenergie durch elastische oder plastische Verformung des Energieabsorbers (1) oder durch Reibung des Energieabsorbers (1) an der Gehäuseinnenfläche erfolgt.

4. Haltesystem nach einem der Ansprüche 1 bis 3, weiterhin umfassend:
einen zweiten Befestigungsbereich (6);
wobei der zweite Befestigungsbereich (6) zur Befestigung des Halters an der Inneneinrichtung (4) ausgeführt ist.

5. Haltesystem nach einem der Ansprüche 1 bis 4,
wobei die Befestigung des Halters an der Primärstruktur oder an der Inneneinrichtung (4) mittels einer Schraube, Niete oder selbstverriegelnden Steckbolzen erfolgt.

6. Haltesystem nach einem der Ansprüche 1 bis 5,
wobei es sich bei der Inneneinrichtung (4) um ein Gepäckfach handelt.

7. Haltesystem nach einem der Ansprüche 1 bis 6,
wobei der Halter weiterhin ein Stellelement (8) aufweist; und
wobei über das Stellelement (8) eine Reibungskraft oder Haftkraft zwischen dem Energieabsorber (1) und der Gehäuseinnenfläche einstellbar ist.

8. Haltesystem nach einem der Ansprüche 1 bis 7,
wobei der Halter eine Energieabsorptionsrichtung aufweist; und
wobei erst bei Überschreitung einer Mindestkraft, welche in Richtung der Energieabsorptionsrichtung wirkt, eine Energieabsorption durch den Energieabsorber auftritt.

9. Flugzeug umfassend ein Haltesystem nach einem der Ansprüche 1 bis 8.

## Claims

1. A mounting device for an interior equipment of an aircraft, comprising:
an interior equipment (4);
a first mounting device; with an energy absorber (1) and a housing (2);
a linear guide (17);
a bearing (19); wherein the first mounting device has a first energy absorption direction;
wherein the linear guide (17) has a guide direction;
wherein the guide direction has a component which is parallel to the energy absorption direction of the first mounting device; and
wherein the interior equipment (4) is slidably held on the linear guide by means of the bearing,
wherein in case of an impulse along the guide direction the resulting energy is absorbed by the energy absorber (1), wherein thereby a movement of the interior equipment (4) takes place relative to the guide rail (17) in the guide direction;
wherein the interior equipment (4) can be connected with a primary structure of the aircraft via the linear guides (17);
wherein the first mounting device can be mounted between a primary structure of the aircraft and the interior equipment (4);
wherein the energy absorber (1) is at least partly arranged in the housing (2) and has a first fastening region (5) outside of the housing (2), which is designed for fastening the mounting device (100) to the primary structure of the aircraft; and
wherein the energy absorber (1) is deformable within the housing (2) by being moved out of the housing (2) and by being moved into the housing (2), so that multiple crash impulses including a rebound can be absorbed.

2. The mounting device of claim 1, further comprising:
a second mounting device with a second energy absorber and a second housing;
wherein the second mounting device has a second energy absorption direction;
wherein the guide direction has a component which is perpendicular to the second energy absorption direction; and
wherein the first fastening region (5) of the second mounting device is fastened to the bearing (19);
wherein the second mounting device is mounted between a primary structure of the aircraft and the interior equipment (4);
wherein the second energy absorber is at least partly arranged in the second housing and has a first fastening region outside of the second housing, which is designed for fastening the second mounting device (100) to the primary structure of the aircraft; and
wherein the second energy absorber is deformable within the second housing by being moved out of the second housing and by being pushed into the second housing, so that multiple crash impulses including a rebound can be absorbed.

3. The mounting device of one of claims 1 or 2,
wherein the housing (2) comprises an interior surface; and
wherein the absorption of acceleration energy takes place by elastic or plastic deformation of the energy absorber (1), or by friction between the energy absorber (1) and the housing interior surface.

4. The mounting device of one of claims 1 to 3, further comprising:
a second fastening region (6);
wherein the second fastening region (6) is designed for fastening the mounting device to the interior equipment (4).

5. The mounting device of any of claims 1 to 4,
wherein the fastening of the mounting device to the primary structure or to the interior equipment (4) takes place by means of a screw, rivet or a self-locking plug-in pin.

6. The mounting device of any of claims 1 to 5,
wherein the interior equipment (4) is an interior component.

7. The mounting device of any of claims 1 to 6,
wherein the mounting device further comprises an adjustment element (8); and
wherein the frictional strength or the adhesive strength between the energy absorber (1) and the housing interior surface can be adjusted by way of the adjustment element (8).

8. The mounting device of any of claims 1 to 7,
wherein the mounting device has an energy absorption direction; and
wherein energy absorption by the energy absorber only occurs if a minimum force which acts in the direction of the energy absorption direction, is exceeded.

9. An aircraft comprising a mounting device of any of claims 1 to 8.

## Revendications

1. Système de retenue pour un équipement intérieur dans un avion, comprenant :
- un équipement intérieur (4) ;
- un premier dispositif de retenue, avec un absorbeur d'énergie (1) et un carter (2);
- un guidage linéaire (17) ;
- un palier (19) ; le premier dispositif de retenue présentant une direction d'absorption d'énergie ;
système de retenue dans lequel,
- le guidage linéaire (17) présente une direction de guidage ;
- la direction de guidage présente une composante parallèle à la direction d'absorption d'énergie du premier dispositif de retenue ; et
- l'équipement intérieur (4) est monté glissant sur le guidage linéaire au moyen du palier,
- lors d'une impulsion le long de la direction de guidage, l'énergie résultante étant absorbée par l'intermédiaire de l'absorbeur d'énergie (1), un déplacement de l'équipement intérieur (4) par rapport aux rails de guidage (17) s'effectuant alors dans la direction de guidage ;
- l'équipement intérieur (4) pouvant être assemblé par l'intermédiaire des guidages linéaires (17) à une structure primaire de l'avion ;
- le premier dispositif de retenue pouvant être monté entre une structure primaire de l'avion et l'équipement intérieur (4) ;
- l'absorbeur d'énergie (1) étant disposé au moins en partie dans le carter (2) et présentant à l'extérieur du carter (2) une première zone de fixation (5), qui est réalisée pour le montage du dispositif de retenue (100) sur la structure primaire de l'avion ; et
- l'absorbeur d'énergie (1) étant déformable à l'intérieur du carter (2) par retrait hors du carter (2) et par insertion dans le carter (2), de sorte que des impulsions de crash multiples, y compris un rebond, sont absorbables.

2. Système de retenue suivant la revendication 1, comprenant en outre :
- un second dispositif de retenue avec un second absorbeur d'énergie et un second carter ; système de retenue dans lequel
- le second dispositif de retenue présente une seconde direction d'absorption d'énergie ;
- la direction de guidage présente une composante perpendiculaire à la seconde direction d'absorption d'énergie ; et
- la première zone de fixation (5) du second dispositif de retenue est fixée sur le palier (19) ;
- le second dispositif de retenue pouvant être monté entre une structure primaire de l'avion et l'équipement intérieur (4) ;
- le second absorbeur d'énergie étant disposé au moins en partie dans le second carter et présentant à l'extérieur de ce dernier une première zone de fixation, qui est réalisée pour le montage du second dispositif de retenue (100) sur la structure primaire de l'avion ; et
- le second absorbeur d'énergie étant déformable à l'intérieur du second carter par retrait hors du second carter et par insertion dans le second carter, de sorte que des impulsions de crash multiples, y compris un rebond, sont absorbables.

3. Système de retenue suivant l'une des revendications 1 et 2, dans lequel
- le carter (2) présente une surface intérieure ; et
- l'absorption de l'énergie d'accélération s'effectue par déformation élastique ou plastique de l'absorbeur d'énergie (1) ou par frottement de l'absorbeur d'énergie (1) sur la surface intérieure du carter.

4. Système de retenue suivant l'une des revendications 1 à 3, comprenant en outre :
- une seconde zone de fixation (6) ;
- la seconde zone de fixation (6) étant réalisée pour la fixation du dispositif de retenue sur l'équipement intérieur (4).

5. Système de retenue suivant l'une des revendications 1 à 4, dans lequel la fixation du dispositif de retenue sur la structure primaire ou sur l'équipement intérieur (4) s'effectue au moyen d'une vis, d'un rivet ou d'un axe embrochable à blocage automatique.

6. Système de retenue suivant l'une des revendications 1 à 5, dans lequel l'équipement intérieur (4) est un compartiment à bagages.

7. Système de retenue suivant l'une des revendications 1 à 6, dans lequel
- le dispositif de retenue présente en outre un élément de réglage (8) ; et
- une force de friction ou force d'adhérence entre l'absorbeur d'énergie (1) et la surface intérieure du carter est réglable par l'intermédiaire de l'élément de réglage (8).

8. Système de retenue suivant l'une des revendications 1 à 7, dans lequel
- le dispositif de fixation présente une direction d'absorption d'énergie ; et
- une énergie d'absorption par l'absorbeur d'énergie n'est produite qu'en cas de dépassement par le haut d'une force minimale, qui agit en direction de la direction d'absorption d'énergie.

9. Avion comprenant un système de retenue suivant l'une des revendications 1 à 8.
